# EUROPÄISCHE PATENTSCHRIFT

(11) **EP 0 825 044 B1**
(45) Veröffentlichungstag und Bekanntmachung des Hinweises auf die Patenterteilung: **22.06.2005**
(21) Anmeldenummer: 97111088.7
(22) Anmeldetag: 03.07.1997
(51) Int. Cl.: B60H 1/00

(54) **Verfahren und Anordnung zur Mischluftregelung einer Heiz-/Klimaanlage eines Kraftfahrzeuges**
Method and device for controlling the mixing of air in a vehicle heating or air conditioning
Procédé et dispositif de régulation du mélange d'air dans une installation de chauffage ou de climatisation de véhicule

(30) Priorität: 09.08.1996 DE 19632059
(43) Veröffentlichungstag der Anmeldung: 25.02.1998
(73) Patentinhaber: Siemens Aktiengesellschaft, 80333 München (DE)
(72) Erfinder: Kettner, Detlef, 68782 Brühl (DE); Gattnar, Gregor, 61267 Neu-Anspach (DE)

(56) Entgegenhaltungen:
- DE-A- 3 624 170
- US-A- 5 516 041
- PATENT ABSTRACTS OF JAPAN vol. 010, no. 118 (M-475), 2. Mai 1986 (1986-05-02) & JP 60 248423 A (MATSUSHITA DENKI SANGYO KK), 9. Dezember 1985 (1985-12-09)
- PATENT ABSTRACTS OF JAPAN vol. 010, no. 118 (M-475), 2. Mai 1986 (1986-05-02) & JP 60 248422 A (MATSUSHITA DENKI SANGYO KK), 9. Dezember 1985 (1985-12-09)
- PATENT ABSTRACTS OF JAPAN vol. 010, no. 281 (M-520), 25. September 1986 (1986-09-25) & JP 61 102306 A (DIESEL KIKI CO LTD), 21. Mai 1986 (1986-05-21)

## Beschreibung

Die Erfindung betrifft ein Verfahren zur Mischluftregelung in einem Heiz/Klimagerät eines Kraftfahrzeuges, bei welchem Außenluft und/oder Umluft dem Heiz-/Klimagerät zugeführt wird, welches die Außenluft- und/oder Umluftzufuhr in den Fahrzeuginnenraum steuert sowie eine Anordnung zur Durchführung des Verfahrens.

Bei heute üblichen Kraftfahrzeug-Heiz-/Klimaanlagen wird wahlweise Außenluft oder Umluft oder auch ein Luftgemisch aus Umluft und Außenluft mit einem konstanten Mischverhältnis zur Luftaufbereitung mit einem Ventilator durch die Klimaanlage befördert.

Mit zunehmenden Komfortansprüchen entstand bei Fahrzeugheiz- und Klimaanlagen der Wunsch, die Fahrzeuginnentemperatur automatisch so zu regeln, daß die Fahrzeuginsassen sich im Fahrzeug möglichst wohl fühlen. Üblicherweise wird dabei mittels eines Temperaturfühlers die Fahrzeuginnentemperatur gemessen und mit einer Steuereinrichtung die gewünschte Temperatur eingestellt.

Aus der DE 36 24 170 A1 ist ein Verfahren zum Betreiben einer Heiz-und/oder Klimaanlage für Kraftfahrzeuge bekannt, bei welchem das Klima in Scheibennähe in Abhängigkeit von den Signalen des ersten Temperatursensors und eines ersten Feuchtesensors sowie wenigstens eines zweiten, im Außenbereich des Kraftfahrzeuges angeordneten Temperatursensors derart beeinflusst wird, dass einer Taupunktunterschreitung auf den Innenseiten der Scheiben entgegengewirkt wird.

Insbesondere im Heizbetrieb stellen die modernen Verbrennungsmotoren nicht immer genügend Abwärme für Heizungszwecke des Fahrzeuginnenraumes zur Verfügung. Um diesen Heizwärmemangel auszugleichen, werden elektrische bzw. brennstoffbetriebene Zuheizer in die Heizanlage integriert. Dabei wird meistens energiearme Außenluft auf ein gewünschtes Temperaturniveaus gebracht, was einen zusätzlichen Energieverbrauch zur Folge hat. In Elektrofahrzeugen hat der hohe Energieverbrauch einer Heizung einen negativen Einfluss auf die Fahrleistung und Reichweite des Fahrzeuges.

Aus der DE-A-36 24 170 ist ein Verfahren zur Mischluftregelung bekannt, das über entsprechende Sensoren Temperatur und Feuchtigkeit der Innenraumluft eines Fahrzeuges berücksichtigt. Durch verschiedene Maßnahmen, wie eine Temperaturabsenkung, eine Luftentfeuchtung oder eine Steuerung der umgewälzten Luftmenge, wird ein Luftfeuchtebereich aufrechterhalten, der dem Komfortbedürfnis der Insassen entspricht und ein Beschlagen der Fahrzeugscheiben vermeidet. Es wird entweder Außenluft oder Innenraumluft angesaugt und dem Innenraum zugeführt.

Aus der JP-60248423 ist ein Verfahren zur Klimaregelung bekannt, bei dem die Temperatur und Luftfeuchtigkeit ausgewertet wird. Abhängig vom Ergebnis eines Vergleichs der Taupunkttemperatur mit der Scheibentemperatur wird entweder Umluftzirkulation oder die Zirkulation von Außenluft aufrechterhalten.

Der Erfindung liegt somit die Aufgabe zugrunde, ein Verfahren zur Optimierung des Energieverbrauchs für Heiz-/Klimaanlagen eines Kraftfahrzeuges anzugeben.

Die Aufgabe wird durch ein Verfahren gemäß Anspruch 1 gelöst.

Der Vorteil der Erfindung besteht darin, dass dem Wärmetauscher des Heiz-/Klimagerätes ein automatisch geregeltes Luftgemisch zugeführt wird, welches den energetisch günstigsten Zustand aufweist. Ein Beschlagen der Fahrzeugscheiben im Innenraum des Fahrzeuges wird somit wirksam verhindert, ohne die Aufmerksamkeit des Fahrzeugführers vom eigentlichen Verkehrsgeschehen abzulenken. Die notwendige Heizleistung kann dabei deutlich reduziert werden. Auf aufwendige Zusatzheizungen kann meistens verzichtet werden.

In einer Weiterbildung werden zur Bestimmung der Taupunkttemperatur der Raumluft im Fahrzeug die relative Luftfeuchtigkeit und die Temperatur der Raumluft gemessen.

Die Bestimmung der Scheibentemperatur erfolgt durch direkte Messung der Temperatur auf der Innenseite der Fahrzeugscheibe.

Alternativ dazu wird die Scheibentemperatur aus der Außenlufttemperatur und entsprechenden Korrekturwerten berechnet.

Vorteilhafterweise wird die Taupunkttemperatur der Raumluft durch das Verhältnis von Außenluft und Umluft durch die Zufuhr von Außenluft so eingestellt, dass sie geringer ist als die Temperatur auf der Innenseite der Fahrzeugscheibe.

Ein ausreichender Außenluftstrom sorgt für die Aufnahme der im Fahrzeuginnenraum ausgeschiedenen Feuchtigkeit.

Es wird ein Mindestaußenluftanteil in Abhängigkeit der aus dem Fahrzeuginnenraum abzuführenden Feuchtigkeit eingestellt. Dies erfolgt in einer Ausführung in Abhängigkeit der im Kraftfahrzeug befindlichen Personenzahl. Es kann aber auch nur durch einen Vergleich der Taupunkttemperatur der Raumluft und der Temperatur auf der Innenseite der Scheibe erfolgen.

Um eine sichere Sauerstoffversorgung der Fahrzeuginsassen zu gewährleisten, wird ständig ein Mindestaußenluftstrom im Fahrzeuginnenraum eingestellt.

Um sicherzustellen, dass alle im Fahrzeug anwesenden Personen ausreichend mit Außenluft versorgt werden, wird der sauerstoffbedingte Mindestaußenluftstrom in Abhängigkeit der im Fahrzeug befindlichen Personenzahl gewählt oder der von einem Schadstoffsensor gelieferten Signale angenommen oder berechnet.

Zeitlich begrenzt ist auch ein 100 % Umluftanteil möglich.

Der feuchtebedingte Mindestaußenluftanteil wird mit dem sauerstoffbedingten Mindestaußenluftstrom verglichen und der jeweils größere Außenluftstrom mittels eines Luftklappensystems als Sollaußenluftstrom eingestellt.

In einer Weiterbildung der Erfindung wird die spezifische Enthalpie der Außenluft sowie der Umluft und/oder einer Mischluft bestimmt und nach einem Vergleich der so ermittelten spezifischen Enthalpien die Zufuhr von Außenluft und Umluft so geregelt, daß die Mischluft die jeweils energetisch günstigste spezifische Enthalpie aufweist.

Unter Berücksichtigung einer minimalen Außenluftmenge, die für die Aufnahme der aus dem Fahrzeuginnenraum abzuführenden Feuchtigkeit und die Gewährleistung der Sauerstoffversorgung der Insassen notwendig ist, wird das Klappensystem so gesteuert, daß nach dem Vergleich der spezifischen Enthalpien die Zufuhr von Außenluft sowie Umluft so geregelt wird, daß sich die niedrigste spezifische Enthalpiedifferenz an einem Wärmetauscher einstellt.

Die Bestimmung der spezifischen Enthalpie erfolgt durch Messung der Temperatur und der relativen Luftfeuchtigkeit des jeweiligen Luftstromes. Alternativ erfolgt die Bestimmung der spezifischen Enthalpie mittels der Feuchtkugeltemperatur.

Das erfindungsgemäße Verfahren wird vorzugsweise durch eine Anordnung nach Anspruch 13 realisiert, welche in einem Heiz- und Klimagerät des Kraftfahrzeuges eine Außenluftklappe und eine Umluftklappe aufweist, welche über mindestens ein Stellelement von einem Heizungs- und Klimasteuergerät ansteuerbar sind und das Heizungs- und Klimasteuergerät einerseits mit einem Innentemperatursensor und einem Luftfeuchtesensor verbunden sind, welche in der Fahrgastzelle angeordnet sind und die entsprechenden Signale zur Bestimmung der Taupunkttemperatur der Raumluft liefern und andererseits das Heizungs- und Klimasteuergerät die Scheibentemperatur aus der Außenlufttemperatur ableitet und das Heizungs- und Klimasteuergerät die Außenluftklappe und die Umluftklappe in Abhängigkeit dieser Signale auf- und zusteuert.

Vorteilhafterweise sind in der Außenluft und/oder in der Umluft je ein weiterer Temperatursensor und ein Luftfeuchtesensor angeordnet, welche mit dem Heizungs- und Klimasteuergerät verbunden sind und das Heizungs- und Klimasteuergerät aus diesen Signalen sowie aus den Signalen der in der Raumluft angeordneten Sensoren für die Temperatur und die relative Luftfeuchtigkeit die spezifischen Enthalpien des Außenluft-, Umluft und/oder Mischluftstromes bestimmt und die Außenluftklappe und die Umluftklappe in Abhängigkeit der spezifischen Enthalpien regelt.

Der Innentemperatursensor und der Luftfeuchtesensor sind in der Fahrgastzelle in der Umluft angeordnet.

In einer Weiterbildung sind der Temperatursensor und der Luftfeuchtesensor des Mischluftstromes hinter dem Ventilator angeordnet.

Das Heizungs- und Klimasteuergerät ist mit Sensoren zur Detektion von Personen im Kraftfahrzeug verbunden.

Es läßt sich somit einfach mit an sich bekannten, in jedem Heiz-/Klimagerät vorhandenen Mitteln das erfindungsgemäße Verfahren realisieren.

Insbesondere der Einsatz eines Mikrocomputers als Regeleinrichtung ermöglicht eine einfache Bestimmung der Taupunkttemperatur der Raumluft sowie der spezifischen Enthalpie von Außenluft, Umluft und Mischluft mit Hilfe geeigneter Software.

Die Erfindung läßt zahlreiche Ausführungsbeispiele zu. Eines davon soll anhand der in der Zeichnung dargestellten Figuren näher erläutert werden.

Es zeigt:

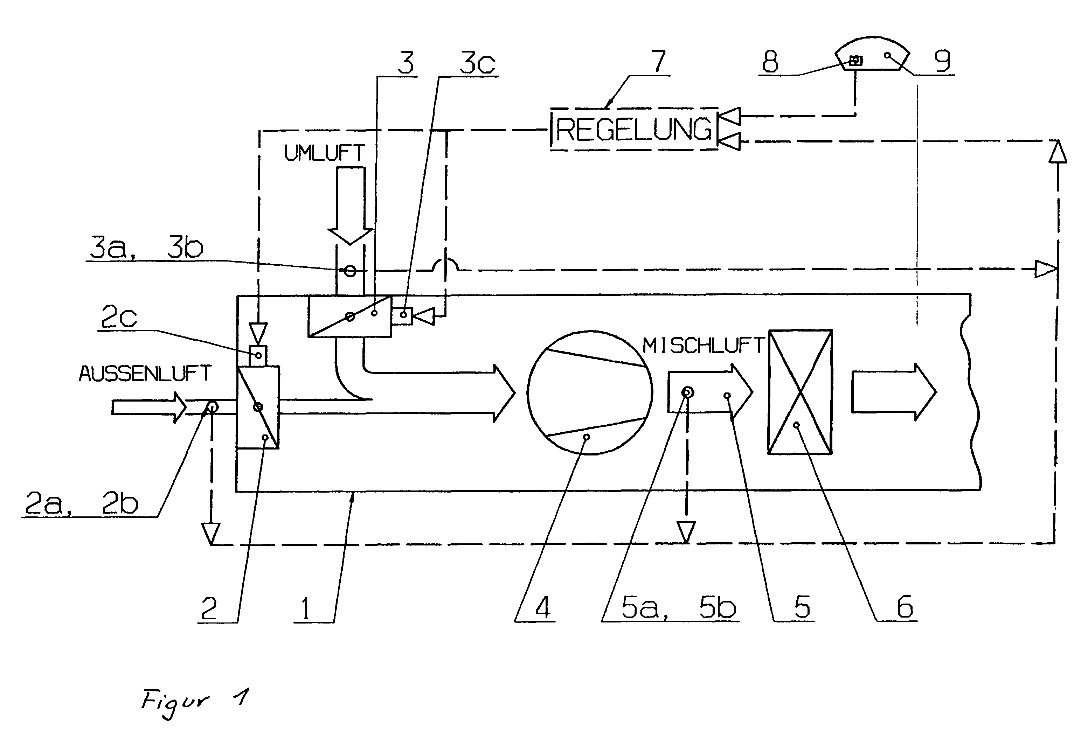

- Fig. 1:: Die für das erfindungsgemäße Verfahren notwendigen Mittel einer Heiz- und Klimaanlage eines Kraftfahrzeuges,
- Fig. 2:: Anordnung im Kraftfahrzeug,
- Fig. 3:: Mollier-h,x-Diagramm für Heiz-/Klimaanlagen nach dem Stand der Technik,
- Fig. 4:: Mollier-h,x-Diagramm gemäß des erfindungsgemäßen Verfahrens.

Prinzipiell wird einer Fahrgastzelle, in welcher sich die Raumluft befindet, von außen Zuluft zugeführt. Diese Zuluft setzt sich aus Außen- und Umluft zusammen, kann aber auch aus 100 % Außenluft oder Umluft bestehen. Die aus der Fahrgastzelle abgeführte Abluft wird anteilmäßig als Fortluft an die Atmosphäre abgegeben oder als Umluft der Fahrgastzelle wieder zugeführt. Auch hier sind die Anteile variabel und schwanken zwischen 0 und 100 %. Um diesen Luftkreislauf zu regeln, sind in einem Heiz- und Klimagerät 1 sowohl eine Außenluftklappe 2 zur Zufuhr von Außenluft und eine Umluftklappe 3 zur Einstellung der Umluftzufuhr aus dem Kraftfahrzeug angeordnet. Dieses Klappensystem ermöglicht die Einstellung eines definierten Außen- zu Umluftmassenstrom-Verhältnisses.

Das Klappensystem kann sowohl aus einer Außenluft-/Umluft-Klappe wie auch aus mehreren von einander unabhängigen oder abhängigen Klappen für die Außen- und Umluft bestehen. Zur Erläuterung der Erfindung sind eine Außenluftklappe 2 und eine Umluftklappe 3 ausreichend, beide werden von je einem Stellmotor 2c, 3c angesteuert.

Die Außen- und Umluft wird mittels eines Ventilators 4 gefördert und dabei gleichzeitig verwirbelt. Es entsteht Mischluft 5, die dem Wärmetauscher 6 zugeführt und von diesem im Heizbetrieb an den Fahrzeuginnenraum als Zuluft abgegeben wird.

Der Wärmeleistungsbedarf des Wärmetauschers 6 eines Heiz-/Klimagerätes 1 bestimmt sich aus dem Produkt der spezifischen Enthalpiedifferenz zwischen Ein- und Austritt der zu erwärmenden Luft durch den Wärmetauscher und des Luftmassenstromes durch den Wärmetauscher.

Um ein energetisch günstiges Außenluft-/Umluft-Verhältnis einzustellen, wird die spezifische Enthalpie sowohl der Außenluft als auch der Umluft bestimmt.

Alternativ dazu können die spezifischen Enthalpien der Außenluft als auch der Mischluft 5 vor dem Wärmetauscher 6 verglichen werden.

Zu diesem Zweck sind in der Außenluft in der Nähe der Außenluftklappe 2 der Fahrgastzelle ein Temperatursensor 2a und ein Sensor für die relative Luftfeuchtigkeit 2b in der Wandung des Außenluftkanals angeordnet.

Ein Temperatursensor 3a und ein weiterer Sensor für die relative Luftfeuchtigkeit 3b sind auch in der Nähe der Umluftklappe 3 in der Wand des Umluftkanals angeordnet. Genauso wie die Sensoren 2a, 2b im Außenluftkanal können die Sensoren 3a, 3b im Umluftkanal verspritzt, geschraubt oder verklebt an der Wand befestigt sein. Sie können sich aber auch in der Raum-luft oder der Fortluft befinden. Die Signale der Temperatursensoren 2a, 3a und der Luftfeuchtesensoren 2b, 3b werden dem Heiz- und Klimasteuergerät 7 zur Berechnung der spezifischen Enthalpien für die Außenluft und die Umluft zugeführt. Für die Errechnung der Taupunkttemperatur der Umluft werden ebenfalls die Signale des Temperatursensors 3a und des Luftfeuchtesensors 3b verwendet. Für diesen Zweck ist es aber auch denkbar einen separaten Temperatursensor 8 an der Innenseite der Heckscheibe 9 des Fahrzeuges anzuordnen, der die Scheibentemperatur direkt mißt und an das Klima- und Heizungssteuergerät 7 übermittelt. Auf diesen Sensor 8 kann vorteilhafterweise verzichtet werden, wenn die Scheibentemperatur aus der Außenlufttemperatur mit Hilfe von Korrekturwerten ermittelt wird.

Die so ermittelte spezifischen Enthalpien der Außenluft und der Umluft werden miteinander verglichen. Unter Berücksichtigung einer minimalen Außenluftmenge, die für die Aufnahme des aus der Fahrgastzelle abzuführenden Feuchtigkeit und die Gewährleistung der Sauerstoffversorgung der Insassen notwendig ist, wird das Klappensystem so angesteuert, daß sich am Wärmetauscher 6 die niedrigste Enthalpiedifferenz einstellt. Die verschiedenen Öffnungszustände der einzelnen Klappen sind dabei fest einstellbar.

Wie bereits erläutert, ist ein dritter Temperatursensor 5a und ein dritter Luftfeuchtesensor 5b in der Mischluft 5 an der Wandung des Mischluftkanals dem Ventilator 4 nachgeordnet. Auch die Meßergebnisse dieser Sensoren werden dem Heiz- und Klimaregelgerät 7 zugeführt, welches die spezifische Enthalpie der Mischluft 5 errechnet. Je nach Genauigkeitsgrad der Regelung werden die Umluft- und die Außenluftklappe in Abhängigkeit der Enthalpiewerte der Außenluft und der Umluft oder der Außenluft und der Mischluft bestimmt.

Zur Durchführung eines Feinabgleiches der Regelung ist es auch denkbar, daß das Klimasteuergerät 7 die Signale der Sensoren in der Umluft-, Außenluft- und Mischluft gleichzeitig verarbeitet.

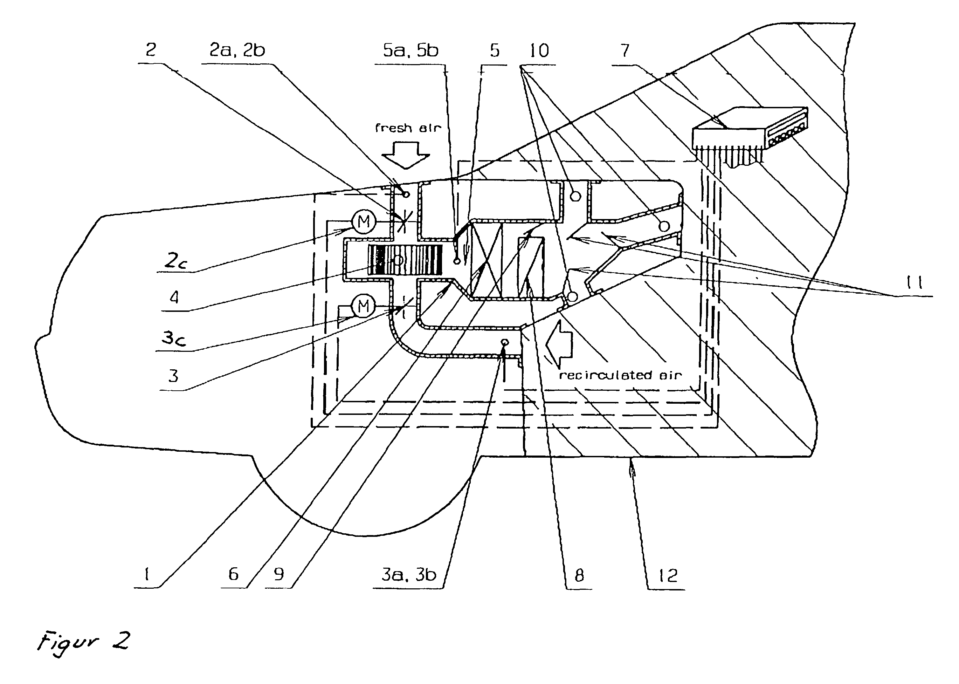

Gemäß Figur 2 ist das Klimagerät 1 noch einmal in seiner konkreten Anordnung im Kraftfahrzeug 12 dargestellt. Gleiche Merkmale sind dabei mit gleichen Bezugszeichen gekennzeichnet.

Über die Frischluftklappe 2, deren Stellung von einem Stellmotor 2c in Abhängigkeit von elektrischen Signalen gesteuert wird, die vom Klimaregelgerät 7 in Abhängigkeit des beschriebenen Verfahrens angesteuert wird, wird Frischluft aus der Umgebung des Fahrzeuges in das Kraftfahrzeug 12 angesaugt.

Die Umluft aus dem Fahrgastraum des Kraftfahrzeuges wird über die Umluftklappe 3 vom Klimagerät 1 angesaugt. Auch die Stellung der Umluftklappe 3 wird in Abhängigkeit von elektrischen Signalen des Klimagerätes 7 von einem Stellmotor 3c gesteuert. Über den Ventilator 4 werden Um- und Frischluft in das Klimagerät gefördert, wodurch hinter dem Ventilator 4 Mischluft 5 entsteht, die dem Kältewärmetauscher 6 zugeführt wird.

Im Kühlbetrieb wird die Mischluft 5 über Ausströmer 10 an den Fahrgastraum abgegeben. Diese Ausströmer 10 sind in Kanälen angeordnet, die in Richtung Windschutzscheibe, in Richtung Fahrer bzw. Beifahrer und in Richtung des Fußbereiches des Fahrers bzw. Beifahrers weisen. Mittels der in den einzelnen Kanälen angeordneten Luftverteilerklappen 11 kann der Lufteintritt vom Fahrer bzw. Beifahrer reguliert werden.

An den Kältewärmetauscher 6 schließt sich ein Heizwärmetauscher 8 an. Die vom Kältewärmetauscher 6 abgegebene Luftmenge wird mit Hilfe einer Temperaturklappe 9 am Heizwärmetauscher 8 vorbeigeführt und dabei erwärmt. Im Heizbetrieb strömt dann die entsprechend temperierte Mischluft in den Fahrgastraum.

Um eine Mindestmenge an Außenluft für die Passagiere zu gewährleisten, wird je nach Anzahl der Kraftfahrzeuginsassen ein sauerstoffbedingter Mindestfrischluftstrom stufenweise eingestellt.

Um festzustellen, wieviel Personen sich im Fahrzeug aufhalten, werden elektrische Kontakte z.B. kapazitive Sensoren in den Fahrzeugsitzen und/oder den Sicherheitsgurtschloßmechanismen durch das Klimasteuergerät 7 abgefragt und so der entsprechende sauerstoffbedingte Mindestaußenluftstrom eingestellt.

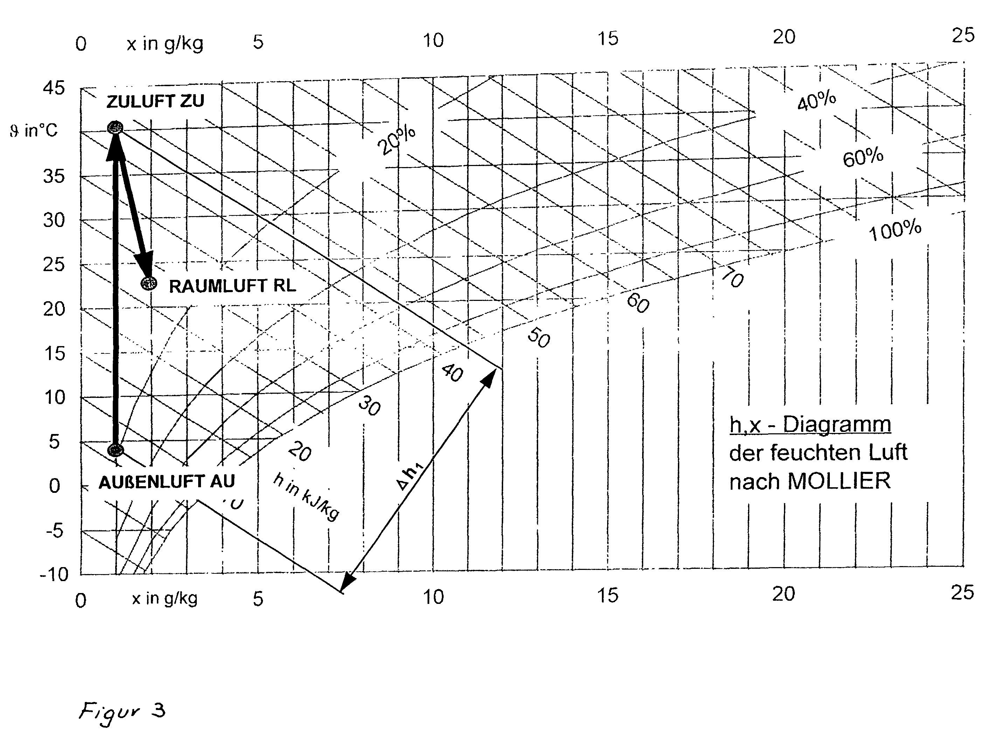

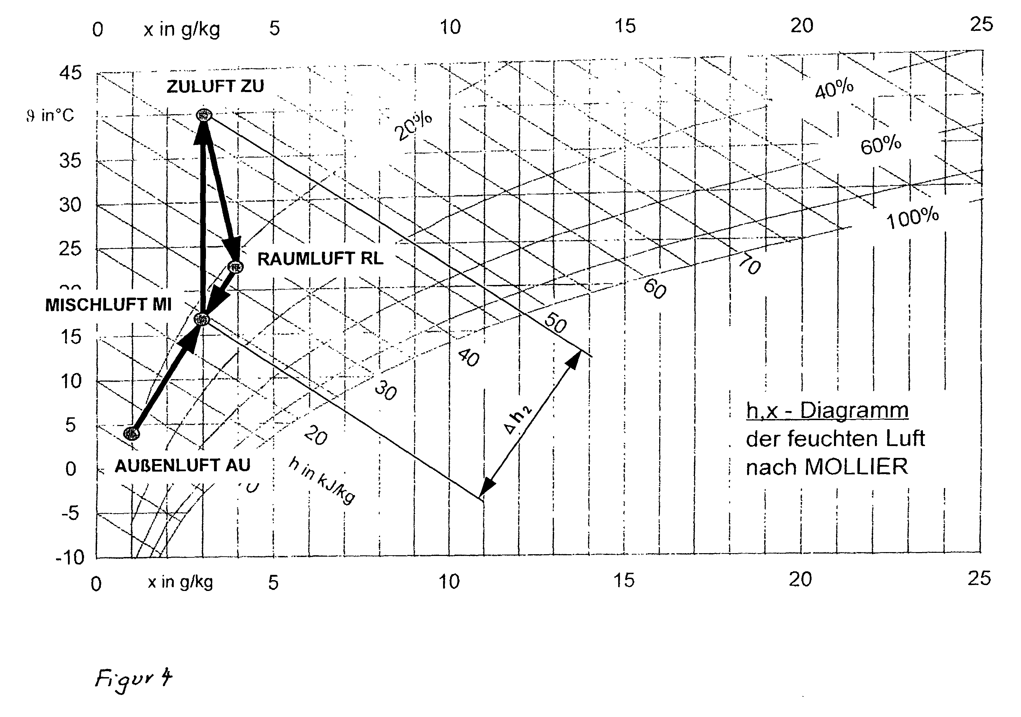

Mit Hilfe des in Figur 3 und 4 dargestellten Mollier-h,x-Diagramms für feuchte Luft soll erläutert werden, wie die Raumlufttemperatur in der Fahrgastzelle erzeugt wird. In diesem Diagramm ist die Temperatur T über dem Wassergehalt der Luft (g/kg) eingetragen. Als Parameter sind die spezifische Enthalpie h in kJ/kg und die relative Feuchte der Luft in Prozent dargestellt.

Nach dem aus dem Stand der Technik bekannten Verfahren (Figur 3) wird Außenluft AU angesaugt, der bei einer bestimmten Temperatur T eine spezifische Enthalpie h_{AU} entspricht. Mittels der Heizung-Motorabwärme und einer eventuellen Zusatzheizung - wird die Außenluft AU auf eine Temperatur von z.B. 40 °C erwärmt und als Zuluft ZU mit einer Enthalpie h_{ZU} aus dem Heiz-/Klimagerät in den Fahrzeuginnenraum geleitet, wobei die so entstehende Raumluft RL eine Temperatur von 22 °C aufweist. Bei 100 % Außenluftzufuhr ergibt sich somit eine Enthalpiedifferenz vor dem Wärmetauscher von Δ h₁ = h_{ZU} - h_{AU}.

Gemäß dem erfindungsgemäßen Verfahren wird, wie aus Figur 4 ersichtlich, die Außenluft AU mit der Raumluft RL zu einer Mischluft MI gemischt, welche die Enthalpie h_{MI} aufweist. Die Mischluft MI hat somit schon eine höhere Enthalpie als die Außenluft. Diese Mischluft MI wird durch die Heizung wieder auf 40 °C erwärmt und als Zuluft ZU mit der Enthalpie h_{ZU} dem Fahrgastraum zugeführt, wo sich die Raumluft RL mit einer Temperatur von 22 °C einstellt.

In diesem Fall wird eine Heizenergie benötigt Δh₂ = h_{ZU} - h_{MI}. Wie aus den Figuren 2 und 3 ersichtlich, ist der Energieaufwand Δh₂ nach dem erfindungsgemäßen Verfahren immer geringer als nach dem bisher bekannten Verfahren.

## Patentansprüche

1. Verfahren zur Mischluftregelung in einem Heiz-/Klimagerät eines Kraftfahrzeuges, bei welchem Außenluft und/oder Umluft dem Heiz-/Klimagerät zugeführt werden und welches die Außenluft und/oder Umluftzufuhr in den Fahrzeuginnenraum steuert, wobei die Außenluft und/oder Umluftzufuhr so eingestellt wird, dass die Taupunkttemperatur der Raumluft im Fahrzeug kleiner ist, als die Temperatur auf der Innenseite einer Fahrzeugscheibe **dadurch gekennzeichnet, dass** aus der Außenluft und der Umluft Mischluft gebildet wird, die dem Innenraum zugeführt wird, und ein Mindestaußenluftanteil der Mischluft in Abhängigkeit der aus dem Fahrzeuginnenraum abzuführenden Feuchtigkeit eingestellt wird.

2. Verfahren nach Anspruch 1, **dadurch gekennzeichnet, dass** zur Bestimmung der Taupunkttemperatur der Raumluft die relative Luftfeuchtigkeit und die Temperatur der Raumluft gemessen wird.

3. Verfahren nach Anspruch 1, **dadurch gekennzeichnet, dass** die Scheibentemperatur durch Messung der Temperatur auf der Innenseite einer Fahrzeugscheibe bestimmt wird.

4. Verfahren nach Anspruch 1, **dadurch gekennzeichnet, dass** die Scheibentemperatur aus der Außenlufttemperatur abgeleitet wird.

5. Verfahren nach Anspruch 1, **dadurch gekennzeichnet, dass** der feuchtebedingte Mindestaußenluftanteil in Abhängigkeit der im Kraftfahrzeug befindlichen Personenzahl gewählt wird.

6. Verfahren nach einem der vorhergehenden Ansprüche, **dadurch gekennzeichnet, dass** ein Mindestaußenluftstrom zur Gewährleistung eines Mindestsauerstoffgehaltes im Fahrzeuginnenraum eingestellt wird.

7. Verfahren nach Anspruch 6, **dadurch gekennzeichnet, dass** der sauerstoffbedingte Mindestaußenluftstrom in Abhängigkeit der im Kraftfahrzeug befindlichen Personenzahl gewählt wird.

8. Verfahren nach Ansprüche 4 und 7, **dadurch gekennzeichnet, dass** der feuchteabhängige Mindestaußenluftanteil mit dem sauerstoffabhängigen Mindestaußenluftstrom verglichen wird und der jeweils größere Außenluftanteil als Sollaußenluft eingestellt wird.

9. Verfahren nach einem der vorhergehenden Ansprüche, **dadurch gekennzeichnet, dass** die spezifische Enthalpie der Außenluft sowie der Umluft und/oder einer Mischluft bestimmt wird und nach einem Vergleich der so bestimmten spezifischen Enthalpie die Zufuhr von Außenluft und Umluft so geregelt wird, dass die Mischluft die jeweils energetisch günstigste spezifische Enthalpie aufweist.

10. Verfahren nach Anspruch 9, **dadurch gekennzeichnet, dass** nach dem Vergleich der spezifischen Enthalpien die Zufuhr von Außenluft sowie Umluft so geregelt wird, dass sich die niedrigste spezifische Enthalpiedifferenz an einem Wärmetauscher einstellt.

11. Verfahren nach Anspruch 9 oder 10, **dadurch gekennzeichnet, dass** zur Bestimmung der spezifischen Enthalpie die Temperatur und die relative Luftfeuchtigkeit gemessen wird.

12. Verfahren nach einem der Ansprüche 9 oder 10, **dadurch gekennzeichnet, dass** die Bestimmung der spezifischen Enthalpie mittels der Feuchtkugeltemperatur erfolgt.

13. Anordnung zur Durchführung des Verfahrens nach Anspruch 1 mit einem Heiz- und Klimagerät und einer Fahrgastzelle, **dadurch gekennzeichnet, dass** in dem Heiz- und Klimagerät (1) des Kraftfahrzeuges eine Außenluftklappe (2) und eine Umluftklappe (3) angeordnet sind, welche über mindestens ein Stellelement (2c, 3c) von einem Heizungs- und Klimasteuergerät (7) ansteuerbar sind und das Heizungs- und Klimasteuergerät einerseits mit einem Innentemperatursensor (3a) und einem Luftfeuchtesensor (3b) verbunden ist, welche in der Fahrgastzelle angeordnet sind und die entsprechenden Signale zur Bestimmung der Taupunkttemperatur der Raumluft liefern, und andererseits das Heizungs- und Klimasteuergerät (7) die Scheibentemperatur aus der Außenlufttemperatur ableitet und das Heizungs- und Klimasteuergerät (7) die Außenluftklappe (2) und die Umluftklappe (3) in Abhängigkeit dieser Signale auf- und zusteuert.

14. Anordnung nach Anspruch 13, **dadurch gekennzeichnet, dass** ein Temperatursensor (8) zur Bestimmung der Scheibentemperatur an der Innenseite einer Fahrzeugscheibe (9) angeordnet ist.

15. Anordnung nach Anspruch 13, **dadurch gekennzeichnet, dass** in der Außenluft und/oder in der Mischluft je ein weiterer Temperatursensor (2a, 5a) und ein Luftfeuchtesensor (2b, 5b) angeordnet sind, welche mit dem Heizungs- und Klimasteuergerät (7) verbunden sind und das Heizungs- und Klimasteuergerät (7) aus diesen Signalen sowie aus den Signalen der in der Fahrgastzelle angeordneten Sensoren (3a, 3b) für die Temperatur und die relative Luftfeuchtigkeit die spezifischen Enthalpien der Außenluft, Umluft und/oder Mischluft bestimmt und die Außenluftklappe (2) und die Umluftklappe (3) in Abhängigkeit der spezifischen Enthalpien regelt.

16. Anordnung nach Anspruch 13, **dadurch gekennzeichnet, dass** der Innentemperatursensor (3a) und der Luftfeuchtesensor (3b) in der Fahrgastzelle in der Umluft angeordnet sind.

17. Anordnung nach Anspruch 14, **dadurch gekennzeichnet, dass** der Temperatursensor (5a) und der Luftfeuchtesensor (5b) der Mischluft (5) hinter dem Ventilator (4) angeordnet sind.

18. Anordnung nach den Ansprüche 13 - 15, **dadurch gekennzeichnet, dass** das Heizungs- und Klimagerät (4) mit Sensoren zur Detektion von Personen im Kraftfahrzeug verbunden ist.

## Claims

1. Method for controlling the mixing of air in a vehicle heating or air-conditioning unit, in which outside air and/or recirculated air is/are supplied to the heating/air-conditioning unit and which directs the supply of outside air and/or recirculated air into the vehicle interior, the supply of outside air and/or recirculated air being set in such a manner that the dew point temperature of the passenger-compartment air in the vehicle is lower than the temperature on the inside of a vehicle window, **characterized in that** mixed air is formed from the outside air and the recirculated air and is supplied to the interior, and a minimum outside-air portion of the mixed air is set as a function of the moisture to be conducted out of the vehicle interior.

2. Method according to Claim 1, **characterized in that**, to determine the dew point temperature of the passenger-compartment air, the relative air moisture and the temperature of the passenger-compartment air are measured.

3. Method according to Claim 1, **characterized in that** the window temperature is determined by measuring the temperature on the inside of a vehicle window.

4. Method according to Claim 1, **characterized in that** the window temperature is derived from the outside-air temperature.

5. Method according to Claim 1, **characterized in that** the moisture-induced minimum outside-air portion is selected as a function of the number of people in the vehicle.

6. Method according to one of the preceding claims, **characterized in that** a minimum outside-air flow is set in order to ensure a minimum content of oxygen in the vehicle interior.

7. Method according to Claim 6, **characterized in that** the oxygen-induced minimum outside-air flow is selected as a function of the number of people in the vehicle.

8. Method according to Claims 4 and 7, **characterized in that** the moisture-dependent minimum outside-air portion is compared with the oxygen-dependent minimum outside-air flow and the larger outside-air portion in each case is set as the desired amount of outside air.

9. Method according to one of the preceding claims, **characterized in that** the specific enthalpy of the outside air and of the recirculated air and/or of mixed air is determined and, after a comparison of the specific enthalpy determined in this manner, the supply of outside air and recirculated air is controlled in such a manner that the mixed air has the specific enthalpy which is in each case the most favourable in terms of energy.

10. Method according to Claim 9, **characterized in that**, after the comparison of the specific enthalpies, the supply of outside air and recirculated air is controlled in such a manner that the lowest specific difference in enthalpy is set at a heat exchanger.

11. Method according to Claim 9 or 10, **characterized in that**, in order to determine the specific enthalpy, the temperature and the relative air moisture are measured.

12. Method according to either of Claims 9 and 10, **characterized in that** the determination of the specific enthalpy takes place by means of the temperature of the moisture ball.

13. Arrangement for carrying out the method according to Claim 1 with a heating and air-conditioning unit and a passenger cell, **characterized in that** an outside-air flap (2) and a recirculated-air flap (3) are arranged in the heating and air-conditioning unit (1) of the vehicle, which flaps can be activated by a heating and air-conditioning control unit (7) via at least one actuating element (2c, 3c), and, on the one hand, the heating and air-conditioning control unit is connected to an inside temperature sensor (3a) and an air moisture sensor (3b), which are arranged in the passenger cell and supply the corresponding signals for determining the dew point temperature of the passenger-compartment air, and, on the other hand, the heating and air-conditioning control unit (7) derives the window temperature from the outside-air temperature, and the heating and air-conditioning control unit (7) opens up and closes the outside-air flap (2) and the recirculated-air flap (3) as a function of these signals.

14. Arrangement according to Claim 13, **characterized in that** a temperature sensor (8) for determining the window temperature is arranged on the inside of a vehicle window (9).

15. Arrangement according to Claim 13, **characterized in that** a respective further temperature sensor (2a, 5a) and an air moisture sensor (2b, 5b) are arranged in the outside air and/or in the mixed air, which sensors are connected to the heating and air-conditioning control unit (7), and the heating and air-conditioning control unit (7) determines the specific enthalpies of the outside air, recirculated air and/or mixed air from these signals and from the signals from the sensors (3a, 3b) which are arranged in the passenger cell and are intended for the temperature and the relative air moisture, and controls the outside-air flap (2) and the recirculated-air flap (3) as a function of the specific enthalpies.

16. Arrangement according to Claim 13, **characterized in that** the inside temperature sensor (3a) and the air moisture sensor (3b) are arranged in the recirculated air in the passenger cell.

17. Arrangement according to Claim 14, **characterized in that** the temperature sensor (5a) and the air moisture sensor (5b) of the mixed air (5) are arranged behind the fan (4).

18. Arrangement according to Claims 13 to 15, **characterized in that** the heating and air-conditioning unit (7) is connected to sensors for detecting people in the vehicle.

## Revendications

1. Procédé destiné à la régulation du mélange d'air dans un appareil de chauffage et/ou de conditionnement d'air d'un véhicule automobile, procédé au cours duquel de l'air extérieur et/ou de l'air de circulation est envoyé à l'appareil de chauffage et/ou de conditionnement d'air et procédé qui contrôle l'apport d'air extérieur et/ou d'air de circulation dans l'habitacle du véhicule, l'apport d'air extérieur et/ou d'air de circulation étant réglé de telle manière que la température du point de condensation de l'air ambiant dans le véhicule est inférieure à la température sur la face intérieure d'une vitre du véhicule **caractérisé par le fait qu'**un mélange d'air est formé à partir de l'air extérieur et l'air de circulation et est envoyé dans l'habitacle et qu'une proportion minimum d'air extérieur dans le mélange d'air est réglée en fonction de l'humidité à extraire de l'habitacle du véhicule.

2. Procédé selon la revendication 1 **caractérisé par le fait que**, pour la détermination de la température du point de condensation de l'air ambiant, on mesure l'humidité relative de l'air ambiant et la température de l'air ambiant.

3. Procédé selon la revendication 1 **caractérisé par le fait que** la température de la vitre est déterminée par mesure de la température sur la face intérieure d'une vitre du véhicule.

4. Procédé selon la revendication 1 **caractérisé par le fait que** la température de la vitre est déduite à partir de la température de l'air extérieur.

5. Procédé selon la revendication 1 **caractérisé par le fait que** la proportion minimum d'air extérieur définie par le taux d'humidité est choisie en fonction du nombre de personnes se trouvant dans le véhicule automobile.

6. Procédé selon l'une des revendications précédentes **caractérisé par le fait qu'**un courant minimum d'air extérieur est réglé pour garantir une teneur minimum en oxygène dans l'habitacle du véhicule.

7. Procédé selon la revendication 6 **caractérisé par le fait que** le courant minimum d'air extérieur défini par le taux d'oxygène est choisi en fonction du nombre de personnes se trouvant dans le véhicule automobile.

8. Procédé selon les revendications 4 et 7 **caractérisé par le fait que** la proportion minimum d'air extérieur dépendant de l'humidité est comparée au courant minimum d'air extérieur défini par le taux d'oxygène et que, dans chaque cas, la proportion d'air extérieur la plus élevée est réglée en tant que valeur de consigne pour l'air extérieur.

9. Procédé selon l'une des revendications précédentes **caractérisé par le fait que** les enthalpies spécifiques de l'air extérieur, ainsi que de l'air de circulation et/ou d'un mélange d'air sont déterminées et, après une comparaison des enthalpies spécifiques ainsi déterminées, l'apport d'air extérieur et l'apport d'air de circulation sont régulés de telle manière que le mélange d'air a, dans chaque cas, l'enthalpie spécifique la plus favorable au point de vue énergétique.

10. Procédé selon la revendication 9 **caractérisé par le fait que**, après la comparaison des enthalpies spécifiques, l'apport d'air extérieur, ainsi que l'apport d'air de circulation sont réglés de telle manière que la différence d'enthalpie spécifique au niveau d'un échangeur thermique soit la plus faible.

11. Procédé selon la revendication 9 ou 10 **caractérisé par le fait que**, pour la détermination de l'enthalpie spécifique, on mesure la température et l'humidité relative de l'air.

12. Procédé selon la revendication 9 ou 10 **caractérisé par le fait que** la détermination de l'enthalpie spécifique est faite au moyen de la température mesurée au thermomètre à bulbe humide.

13. Dispositif, permettant d'exécuter le procédé selon la revendication 1 et comportant un appareil de chauffage et de conditionnement d'air et un habitacle de véhicule, **caractérisé par le fait que**, dans l'appareil de chauffage et de conditionnement d'air, il y a un clapet (2) pour l'air extérieur et un clapet (3) pour l'air de circulation, lesquels peuvent être commandés, par l'intermédiaire de au moins un élément de commande (2c, 3c), par un appareil de commande (7) du chauffage et du conditionnement d'air, et que l'appareil de commande du chauffage et du conditionnement d'air est relié, d'une part, à un capteur de la température intérieure (3a) et à un capteur de l'humidité de l'air (3b), qui sont disposés dans l'habitacle et qui délivrent les signaux correspondants pour déterminer la température du point de condensation de l'air am-biant dans l'habitacle, et, d'autre part, l'appareil de commande (7) du chauffage et du conditionnement d'air déduit la température des glaces à partir de la température de l'air extérieur et l'appareil de commande (7) du chauffage et du conditionnement d'air ouvre et ferme le clapet (2) pour l'air extérieur et le clapet (3) pour l'air de circulation en fonction de ces signaux.

14. Dispositif selon la revendication 13 **caractérisé par le fait qu'**un capteur de température (8), destiné à la détermination de la température des glaces, est disposé sur la face intérieure d'une glace (9) du véhicule.

15. Dispositif selon la revendication 13 **caractérisé par le fait que**, dans l'air extérieur et/ou, respectivement, dans le mélange d'air, sont disposés, dans chaque cas, un autre capteur de température (2a, 5a) et un capteur d'humidité de l'air (2b, 5b), qui sont reliés à l'appareil de commande (7) du chauffage et du conditionnement d'air, et que l'appareil de commande (7) du chauffage et du conditionnement d'air détermine, à partir de ces signaux, ainsi qu'à partir des signaux des capteurs (3a, 3b) disposés dans l'habitacle pour la température et pour l'humidité relative de l'air, les enthalpies spécifiques de l'air extérieur, de l'air de circulation et/ou du mélange d'air et règle le clapet (2) pour l'air extérieur et le clapet (3) pour l'air de circulation en fonction des enthalpies spécifiques.

16. Dispositif selon la revendication 13 **caractérisé par le fait que** le capteur de la température intérieure (3a) et le capteur de l'humidité de l'air (3b) sont disposés dans l'habitacle dans l'air de circulation.

17. Dispositif selon la revendication 14 **caractérisé par le fait que** le capteur de température (5a) et le capteur (5b) de l'humidité du mélange d'air (5) sont disposés derrière le ventilateur (4).

18. Dispositif selon les revendications 13 à 15 **caractérisé par le fait que** l'appareil de chauffage et de conditionnement d'air (4) est relié à des capteurs permettant de détecter les personnes se trouvant dans le véhicule automobile.
